# EUROPEAN PATENT APPLICATION

(11) **EP 4 571 612 A1**
(43) Date of publication of application: **18.06.2025**
(21) Application number: 24194799.3
(22) Date of filing: 15.08.2024
(51) Int. Cl.: G06Q 10/08, G06Q 10/087, B25J 9/16, B65G 1/137, G06V 20/52, G06Q 10/0631

(54) **CONTROL METHOD AND APPARATUS OF STACKER AND THREE-DIMENSIONAL WAREHOUSE AUTOMATION SYSTEM**

(30) Priority: 13.12.2023 CN 202311715796
(71) Applicant: Zhejiang Hengyi Petrochemical Co., Ltd., Zhejiang 311200 (CN); Taicang Yifeng Chemical Fiber Co.,Ltd., Suzhou Jiangsu 215421 (CN)
(72) Inventor: WANG, Peng, Zhejiang, 311200 (CN); PENG, Xiantao, Zhejiang, 311200 (CN); QIU, Yibo, Zhejiang, 311200 (CN); LI, Dake, Zhejiang, 311200 (CN); XU, Feng, Zhejiang, 311200 (CN); GUO, Yu, Zhejiang, 311200 (CN)
(74) Representative: HGF

(57) **Abstract**

Provided are a stacker control method and apparatus and a three-dimensional warehouse automation system, relating to the field of chemical fiber intellectualization technology. The method includes: acquiring (S101) an intermediate table in response to receiving a task allocation request sent from the stacker; recognizing (S102) images in a first lane of a three-dimensional warehouse through an image recognition model to obtain warehouse state information of warehouse locations in the first lane; determining (S103) a temporary work task of the stacker based on the intermediate table; determining (S 104), based on the warehouse state information of the warehouse locations in the first lane, a position of a target warehouse location corresponding to the temporary work task; and sending (S105) the temporary work task and the position to the stacker, so that the stacker executes the temporary work task based on the position.

## Description

### TECHNICAL FIELD

The disclosure relates to the field of chemical fiber intellectualization technology, and in particular, to a control method and apparatus of a stacker and a three-dimensional warehouse automation system.

### BACKGROUND

In the chemical fiber production field, due to the advantages of high space utilization rate and high automation degree, the three-dimensional warehouse is widely used in a plant area for packing yarn spindles. As one of the key equipment in three-dimensional warehouse, a working state of a stacker affects the efficiency of warehousing and ex-warehousing operations. Therefore, how to improve the efficiency and the safety of the stacker for executing work tasks becomes a technical problem to be solved urgently.

### SUMMARY

The disclosure provides a control method and apparatus of a stacker and a three-dimensional warehouse automation system.

According to a first aspect of the present disclosure, provided is a control method of a stacker applied to an image recognition system and including:
acquiring an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
recognizing a plurality of images in a first lane of a three-dimensional warehouse through an image recognition model to obtain warehouse state information of a plurality of warehouse locations in the first lane;
determining a temporary work task of the stacker based on the intermediate table;
determining, based on the warehouse state information of the plurality of warehouse locations in the first lane, a position of a target warehouse location corresponding to the temporary work task; and
sending the temporary work task and the position of the target warehouse location to the stacker, so that the stacker executes the temporary work task based on the position of the target warehouse location.

According to a second aspect of the present disclosure, provided is a three-dimensional warehouse automation system, comprising:
a warehouse management system configured to send a normal work task to a stacker under the condition of communicating with the stacker, and to send an intermediate table to a computing power center;
the computing power center configured to store the intermediate table, the intermediate table recording at least a work task which has not been completed by the warehouse management system;
the stacker configured to execute the normal work task when receiving the normal work task sent from the warehouse management system, to send a task allocation request to an image recognition system under the condition that the communication with the warehouse management system is interrupted, to receive a temporary work task and a position of a target warehouse location returned by the image recognition system, and to execute the temporary work task based on the position of the target warehouse location; and
the image recognition system configured to acquire the intermediate table from the computing power center in response to receiving the task allocation request sent from the stacker, to recognize a plurality of images in a first lane of a three-dimensional warehouse through an image recognition model to obtain warehouse state information of a plurality of warehouse locations in the first lane, to determine the temporary work task of the stacker based on the intermediate table, to determine the position of the target warehouse location corresponding to the temporary work task based on the warehouse state information of the plurality of warehouse locations in the first lane, and to send the temporary work task and the position of the target warehouse location to the stacker.

According to a third aspect of the present disclosure, provided is a control apparatus of a stacker applied to an image recognition system and including:
a first acquisition module, configured to acquire an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
a recognition module is configured to recognize a plurality of images in a first lane of a three-dimensional warehouse through an image recognition model to obtain warehouse state information of a plurality of warehouse locations in the first lane;
a first determination module, configured to determine a temporary work task of the stacker based on the intermediate table;
a second determination module, configured to determine, based on the warehouse state information of the plurality of warehouse locations in the first lane, a position of a target warehouse location corresponding to the temporary work task; and
a first sending module, configured to send the temporary work task and the position of the target warehouse location to the stacker, so that the stacker executes the temporary work task based on the position of the target warehouse location.

According to a fourth aspect of the present disclosure, provided is an electronic device including:
at least one processor; and
a memory connected in communication with the at least one processor;
wherein the memory stores an instruction executable by the at least one processor, and the instruction, when executed by the at least one processor, enables the at least one processor to execute the method of any one of embodiments of the present disclosure.

According to a fifth aspect of the present disclosure, provided is a non-transitory computer-readable storage medium storing a computer instruction thereon, wherein the computer instruction is used to cause a computer to execute the method of any one of embodiments of the present disclosure.

According to the technology of the present disclosure, under the condition that the communication between the stacker and the warehouse management system is interrupted, the stacker can execute the temporary work task according to the warehouse state information of the warehouse location, thereby improving the efficiency and the safety of the stacker for executing the tasks.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The above and other features, advantages and aspects of embodiments of the present disclosure will become more apparent with reference to the following detailed description, taken in conjunction with the accompanying drawings. In the drawings, like or similar reference numerals denote like or similar elements, in which:
FIG. 1 is a schematic flowchart of a control method of a stacker according to an embodiment of the present disclosure;
FIG. 2 is a schematic diagram of intermediate table contents according to an embodiment of the present disclosure;
FIG. 3 is a schematic training diagram of image recognition model according to an embodiment of the present disclosure;
FIG. 4 is a schematic block diagram of a control system 400 of a stacker according to an embodiment of the present disclosure;
FIG. 5 is a schematic block diagram of a control apparatus of a stacker according to an embodiment of the present disclosure; and
FIG. 6 is a block diagram of an electronic device for implementing a control method of a stacker according to an embodiment of the present disclosure.

### DETAILED DESCRIPTION

Exemplary embodiments of the present disclosure will be described below with reference to the accompanying drawings, in which various details of embodiments of the present disclosure are included to assist understanding, and which are considered to be merely exemplary. Accordingly, an ordinary person skilled in the art will understand that various changes and modifications of the embodiments described herein can be made without departing from the scope of the disclosure. Also, descriptions of well-known functions and constructions will be omitted in the following description for clarity and conciseness.

The terms "first", "second," and "third," etc. in the embodiments and claims of the description and the above-described drawings in the present disclosure are used for distinguishing between similar elements and not necessarily for describing a particular sequential or chronological order. Furthermore, the terms "include" and "have" as well as any variations thereof, are intended to cover a non-exclusive inclusion, such that including a list of steps or units. The methods, systems, products or devices are not necessary to be limited to the explicitly listed steps or elements, but may include other steps or units not expressly listed or inherent to such processes, methods, products or devices.

Before introducing the technical solutions of the embodiments of the present disclosure, explanations of technical terms that may be used throughout the present disclosure are provided:

Three-dimensional warehouse: also known as elevated warehouse or high-rise warehouse, is a warehouse which stores unit goods by adopting a multi-layer, ten-layer or even dozens-layer high shelf and uses corresponding material handling equipment to carry out goods warehousing and ex-warehousing operation. Its main body includes a shelf, a lane-type stacking crane, a workbench for warehousing (ex-warehousing), and automatic transporting-in (out) and operating control system.

Warehouse Management System (WMS): as a dedicated system designed for warehouse management and centered around efficient task execution and process planning strategies, integrates storage space management, barcode/QR code management, and warehouse automation equipment, significantly enhancing operational efficiency and resource utilization.

In the related art, in a chemical production plant of yarn spindle packaging, packaged yarn spindles are stored to a three-dimensional warehouse through a stacker after a yarn spindle packaging process is finished. The three-dimensional warehouse includes a plurality of lanes, each of which is provided with at least one stacker responsible for products warehousing and/or ex-warehousing. The three-dimensional warehouse is also called an elevated warehouse or high-rise warehouse, referring to a warehouse which stores unit goods by adopting a multi-layer, ten-layer or even dozens-layer high shelf and uses corresponding material handling equipment to carry out goods warehousing and ex-warehousing operation.

In the related art, the stacker is a main device for warehousing the yarn spindles. Multiple stackers move in the lanes. In order to ensure the safe operation of the stacker in the lanes in the three-dimensional warehouse, regular inspection of staff of a team or monitoring through a warehouse management system is mainly relied on. However, the manual inspection efficiency is low; when the warehouse management system is used for monitoring, the warehouse management system is possibly crashed so that the efficiency and the safety of the stacker for executing work tasks are influenced. In addition, since workers or animals may be unintendedly entered into the three-dimensional warehouse, it is necessary to monitor the three-dimensional warehouse in real time in order to ensure the safety of the operations.

To solve, at least in part, one or more of the above problems and other potential problems, the present disclosure proposes a control method, system, and apparatus of a stacker. By performing image recognition on the lanes in the three-dimensional warehouse to obtain warehouse state information, it facilitates the stacker to execute temporary work tasks according to the warehouse state information of the warehouse location, thereby improving the efficiency and the safety of the stacker for executing the tasks.

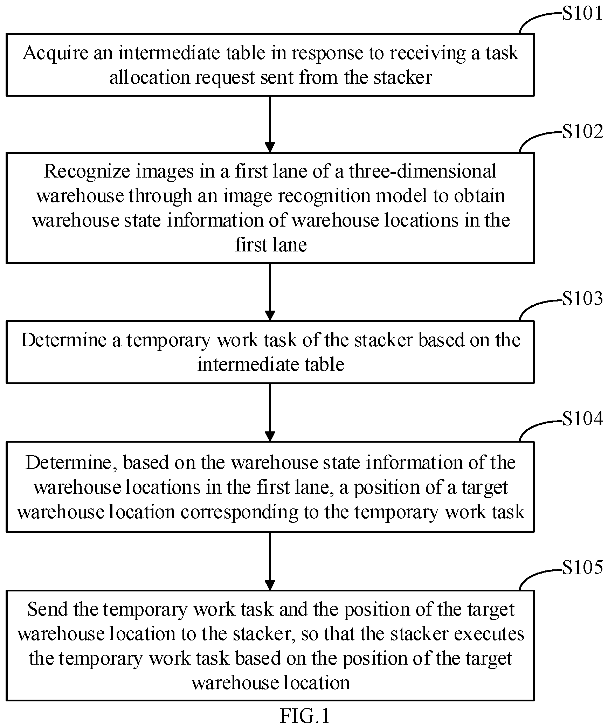

An embodiment of the disclosure provides a control method of a stacker, which is applied to an image recognition system, and FIG. 1 is a schematic flowchart of the control method of the stacker according to the embodiment of the disclosure. The control method of the stacker can be applied to a control apparatus of the stacker. The control apparatus of the stacker is arranged on an electronic device in the image recognition system. The image recognition system is one of the components of a three-dimensional warehouse automation system. In some possible implementations, the control method of the stacker can also be implemented by calling a computer readable instruction stored in a memory by a processor. As shown in FIG. 1, the control method of the stacker includes:
S101: acquiring an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
S102: recognizing a plurality of images in a first lane of a three-dimensional warehouse through an image recognition model to obtain warehouse state information of a plurality of warehouse locations in the first lane;
S103: determining a temporary work task of the stacker based on the intermediate table;
S104: determining, based on the warehouse state information of the plurality of warehouse locations in the first lane, a position of a target warehouse location corresponding to the temporary work task; and
S105: sending the temporary work task and the position of the target warehouse location to the stacker, so that the stacker executes the temporary work task based on the position of the target warehouse location.

In the embodiment of the disclosure, the image recognition system can acquire the intermediate table from a computing power center, which can be used for running important software in a chemical production plant and which has good stability. The image recognition system may be in communication with the computing power center, and the warehouse management system may also be in communication with the computing power center. The image recognition system may be in communication with the stacker. The warehouse management system may be in communication with the stacker. The warehouse management system reports a task execution situation at regular intervals, and the computing power center can generate the intermediate table based on the task execution situation. Alternatively, the warehouse management system uploads the intermediate table to the computing power center at regular intervals.

In the embodiment of the disclosure, the stacker is important handling equipment in the three-dimensional warehouse, which can automatically, quickly and accurately store and take goods in the three-dimensional warehouse, improving the utilization rate and the operation efficiency of the warehouse. Main components of the stacker may include: a pallet fork for forking, transporting and stacking goods in a warehouse or workshop; a load platform for placing the goods; a lifting mechanism for realizing a lifting operation of the goods; a travelling mechanism for realizing movement of the stacker in the warehouse; and a control system for controlling various operations and actions of the stacker. Here, the pallet fork can adopt an electric or hydraulic driving mode and can be stretchable and rotatable according to the requirement; the load platform can adopt a steel structure or an aluminum alloy structure, and has enough bearing capacity and stability; the lifting mechanism can adopt an electric or hydraulic driving mode and has the characteristics of high precision, good stability and good reliability; the travelling mechanism can adopt a wheel or crawler structure and has the characteristics of high moving speed and stable operation; the control system can adopt control elements such as a PLC or a single chip, and has the characteristics of high automation degree and simple and convenient operation.

In the embodiment of the present disclosure, the task allocation request is a request sent from the stacker to the image recognition system when the warehouse management system crashes. The task allocation request can be a task allocation request generated by the stacker according to a target scene; a preset inspection task can also be the task allocation request generated according to a manually input instruction. The above merely serves as an illustrative example and does not constitute a limitation on all possible means of acquiring the task allocation request; an exhaustive list is not provided here.

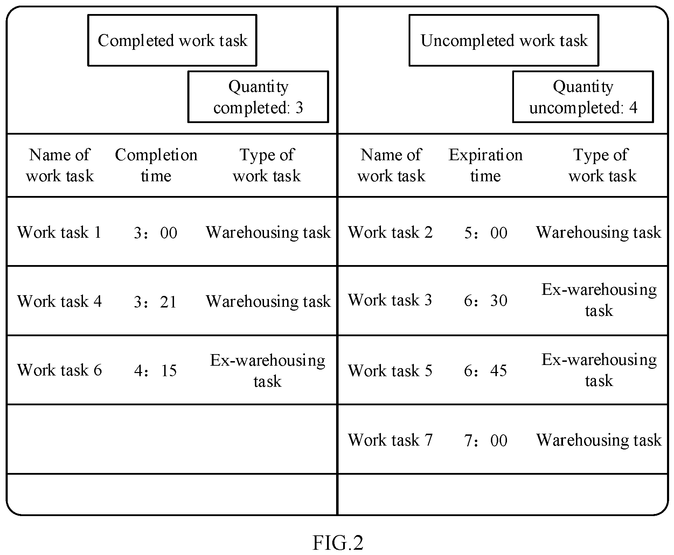

FIG. 2 is a schematic diagram showing contents of the intermediate table. The intermediate table can record completed work tasks and uncompleted work tasks of the warehouse system, but at least record work tasks which are not allocated by the warehouse management system, as shown in FIG. 2. Specifically, the content of the completed work task recorded in the intermediate table may include: a quantity of completed work task, a completion time of completed work task, a type of completed work task, such as a warehousing task or an ex-warehousing task. The content of the uncompleted work task recorded in the intermediate table may include: an expiration of uncompleted work task, a type of uncompleted work task, for example.

In the embodiment of the disclosure, the warehouse management system can provide functions of warehouse entry management, warehouse exit management, warehouse moving management, inventory adjustment, bar code printing, for example, supports batch management, validity period management, multi-package specifications, multi-package bar codes of products, for example, and realizes perfect warehouse logistics information management.

In the embodiment of the disclosure, the warehouse management system can communicate with the computing power center and the stacker. The cases that the communication between the stacker and the warehouse management system is interrupted can include: warehouse management system breakdown and stacker fault. Here, the warehouse management system breakdown may include the cases of: the system breakdown resulted from software of the warehouse management system (for example, the software has defects or is attacked by viruses); the system breakdown resulted from hardware of the warehouse management system, such as failure of a server, network equipment, storage equipment and a power module, for example; and the system breakdown resulted from power fluctuations of the warehouse management system, such as power supply instability and voltage fluctuations, for example.

In the embodiment of the disclosure, the image recognition model is used for recognizing a plurality of images in the lane of a three-dimensional warehouse to obtain the warehouse state information. A training method of the image recognition model includes the following steps: acquiring historical warehouse state information and historical images of a plurality of sample warehouse locations of a three-dimensional warehouse; inputting the historical warehouse state information and the historical images of the plurality of the sample warehouse locations into a preset model to obtain warehouse state prediction values of the plurality of sample warehouse locations; constructing a loss function based on warehouse state truth values and the warehouse state prediction values of the plurality of sample warehouse locations; and training the preset model based on the loss function to obtain the image recognition model. Here, the image recognition model is a model trained in advance.

In some embodiments, the first lane is used to connect an aisle between a warehouse shelf and a stacker. The first lane is typically located between the shelves parallel to the stacker rails. A width and height of the lane may be determined according to a size and design of the warehouse. In the three-dimensional warehouse, the lane is mainly used for moving the stacker and storing and taking the goods.

In some embodiments, the plurality of images may be pictures of the first lane of the three-dimensional warehouse. The plurality of images may be collected by a camera of a control frame deployed in the lane; or may be collected by cameras arranged around the stacker; or may be collected by a drone. The camera can be mounted on a support frame of the stacker, or can be mounted on an overhead frame above the lane. The plurality of images may be pictures directly collected by the camera, or may be some frames of images captured from a video collected by the camera. The plurality of images in the first lane may be images mounted by different cameras in the same time period, or may be multiple images collected by the same camera in the process that the stacker moves for several circles in the first lane.

In some embodiments, the warehouse state information may include: warehouse locations that have stored yarn spindles, warehouse locations that have not stored yarn spindles, batch numbers of yarn spindles stored in the warehouse locations, quantity of yarn spindles stored in the warehouse locations, types of yarn spindles stored in the warehouse locations, for example. The main types of yarns involved in aspects of the embodiments of the disclosure may include one or more of Partially Oriented Yarns (POY), Fully Drawn Yarns (FDY), Draw Textured Yarns (DTY) (also known as low stretch Yarns). For example, the types of the yarns may specifically include Polyester Partially Oriented Yarns, Polyester Fully Drawn Yarns, Polyester Drawn Yarns, Polyester Draw Textured Yarns, and Polyester Staple Fiber, for example.

In some embodiments, the temporary work task is a task that the stacker should perform in the event that the communication between the stacker and the warehouse management system is interrupted. Here, the temporary work task may be a temporary warehousing task or a temporary ex-warehousing task, a temporary moving warehouse location task, for example.

In some embodiments, a position of a target warehouse location is a location of the temporary work task. Illustratively, a warehousing task is performed on a DTY yarn spindles with a batch number A001, and the DTY yarn spindles with the batch number A001 is warehoused in the 3^{rd} warehouse location of the 10^{th} layer on the left side of the lane 20.

In some embodiments, when the temporary work task is a product warehousing task, the stacker executes the temporary work task based on the position of the target warehouse location, including: storing the product to be warehoused to the target warehouse location.

When the temporary work task is a product ex-warehousing task, the stacker executes the temporary work task based on the position of the target warehouse location, including: taking out the product to be ex-warehoused from the target warehouse location. The communication between the stacker and the warehouse management system is interrupted, including: not receiving, by the stacker, a preset signal sent from the warehouse management system within a preset time.

Here, the preset signal may be a Heartbeat Signal; the warehouse management system can regularly send the heartbeat signal to the stacker to inform the stacker whether the warehouse management system is currently in a normal state, and the stacker can in turn judge whether the warehouse management system is in the normal state according to the receipt of the heartbeat signal within the preset time. If the heartbeat signal sent from the warehouse management system is not received within the preset time, whether the warehouse management system is abnormal or not is judged, and the task allocation request is sent to the image recognition system in order not to influence the ex-warehousing and ex-warehousing efficiency. The image in the first lane can be collected by the camera or drone.

The technical scheme according to the embodiment of the disclosure, acquires the intermediate table in response to receiving the task allocation request sent from the stacker; recognizes the plurality of images in the first lane of the three-dimensional warehouse through the image recognition model to obtain warehouse state information of the plurality of warehouse locations in the first lane; determines the temporary work task of the stacker based on the intermediate table; determines the position of the target warehouse location corresponding to the temporary work task based on the warehouse state information of the plurality of warehouse locations in the first lane; and sends the temporary work task and the position of the target warehouse location to the stacker, so that the stacker executes the temporary work task based on the position of the target warehouse location. As such, under the condition that the communication between the stacker and the warehouse management system is interrupted, the stacker can execute the temporary work task according to the warehouse state information of the warehouse location, improving the efficiency and the safety of the stacker for executing the task.

In some embodiments, the control method of the stacker further includes: receiving an execution condition of the temporary work task sent from the stacker; and updating the intermediate table based on the execution condition of the temporary work task.

In some embodiments, the execution condition of the temporary work task may include a progress of the temporary work task, a start time of the temporary work task, an end time of the temporary work task, a quantity of completed temporary work tasks, for example. Here, the progress of the temporary work task may include: the temporary work task not completed, the temporary work task completed, and the temporary work task in progress, for example.

In some embodiments, the updating the intermediate table based on the execution condition of the temporary work task may include: when a condition that the temporary work task is not completed is detected, determining the temporary work task as a uncompleted state in the intermediate table; when a condition that the temporary work task is completed is detected, determining the temporary work task as a completed state in the intermediate table; when a condition that the temporary work task is in progress is detected, determining the temporary work task as an in-progress state in the intermediate table.

Therefore, the image recognition system can count and update the intermediate table in time, such that the warehouse management system can quickly know the operation condition of the stacker during the system breakdown after it recovers to work, assisting the warehouse management system in quickly allocating a new work task for the stacker, thereby improving the work efficiency of the stacker, and further improving the ex-warehousing and warehousing efficiency.

In some embodiments, the control method of the stacker further includes: sending, by the image recognition system, an updated intermediate table to the warehouse management system in response to receiving a task termination request sent from a stacker, so that the warehouse management system performs summary processing based on the updated intermediate table and the intermediate table stored in the warehouse management system, and determining a normal work task based on a summarized intermediate table, wherein the task termination request is sent after the communication between the stacker and the warehouse management system is recovered.

In some embodiments, the task termination request is a request sent from the stacker to the image recognition system when the warehouse management system is recovered to be normal. When receiving the task termination request sent from the stacker, the image recognition system stops generating the temporary work task.

In some embodiments, the image recognition system may send the updated intermediate table to the warehouse management system after the warehouse management system resumes communication with the stacker; the warehouse management system compares the updated intermediate table with the intermediate table stored in the warehouse management system, and then summarizes to obtain the summarized intermediate table; and the normal work task of the stacker is determined based on the summarized intermediate table.

Here, the image recognition system may also send the updated intermediate table to the warehouse management system through the computing power center.

In some embodiments, if the image recognition system can establish communication with the warehouse management system, the updated intermediate table may be sent directly to the warehouse management system.

In some embodiments, the normal work task is a task issued by the warehouse management system. At this time, the communication between the warehouse management system and the stacker are in normal state.

In some embodiments, when the stacker A detects that the communication with the warehouse management system is recovered to be normal, the task termination request is sent to the image recognition system; the image recognition system sends the updated intermediate table to the warehouse management system; the warehouse management system performs summary processing based on the updated intermediate table and the intermediate table stored in the warehouse management system, and determines the normal work task based on the summarized intermediate table; the contents of the updated intermediate table are as follows: warehousing task to DTY yarn spindle with batch number of A001 - completed, warehousing task to FDY yarn spindle with batch number of B005 - not completed, and ex-warehousing task to POY yarn spindle with batch number of F011 - completed; the contents of the intermediate table stored in the warehouse management system are as follows: warehousing task to DTY yarn spindle with batch number of A001 - not completed, warehousing task to FDY yarn spindle with batch number of B005 - not completed, and ex-warehousing task to POY yarn spindle with batch number of F011 - not completed; and the normal work task determined based on the summarized intermediate table is as follows: the warehousing task to FDY yarn spindle with batch number of B005.

Therefore, after the warehouse management system is recovered to be normal, the normal work task can be determined again according to the intermediate table sent from the image recognition system, assisting the warehouse management system in quickly entering a normal work state, thereby improving the efficiency and the accuracy of the work of the stacker, and improving the efficiency of warehousing/ex-warehousing of the yarn spindles.

In some embodiments, after receiving the task allocation request, the control method of the stacker further includes: sending, by the image recognition system, an image capturing instruction to the stacker, wherein the capturing instruction is configured to indicate warehouse locations to be captured and a capturing angle so that the stacker captures images of the warehouse locations to be captured at the capturing angle based on the image capturing instruction, and the warehouse locations to be captured are a portion of warehouse locations all included in the first lane; and receiving the images of the warehouse locations to be captured in the first lane sent from the stacker, wherein the plurality of images include images of the warehouse locations to be captured.

Here, the image capturing instruction may be a capturing instruction for some warehouse locations specified by the image recognition system.

In some embodiments, the image capturing instruction may be configured to: indicate a quantity of the stackers to start, a capturing angle of a stacker camera and capturing warehouse locations by the stacker camera. Here, the image capturing instruction may also be implemented based on the lifting mechanism and the traveling mechanism of the stacker. Illustratively, the image capturing instruction may indicate to start a right camera of the stacker to capture three pictures at an elevation angle of 60 degrees, and start all cameras of the stacker to capture one picture at each of an elevation angle of 30 degrees, an elevation angle of 60 degrees, and an elevation angle of 90 degrees.

In some embodiments, the capturing warehouse locations may be only one warehouse location to be captured; or multiple warehouse locations to be continuously captured; or a warehouse location specified to be captured. The capturing angle may be only one angle of capturing; or multiple angles of continuously capturing; or a warehouse location specified to be captured.

In some embodiments, the image recognition system may continuously receive the images captured by the camera mounted on the overhead frame of the first lane, and obtain the warehouse state information of at least a portion of the warehouse locations by analyzing based on the images captured by the camera mounted on the overhead frame of the first lane. When a task allocation request sent from a stacker is received, a warehouse location to be captured can be determined from all the warehouse locations in the first lane by combining the warehouse state information of at least the portion of the warehouse locations, and then the stacker is instructed to capture images of the warehouse locations to be captured.

Illustratively, the image recognition system sends image capturing instructions to a stacker A, a stacker B and a stacker C; the image capturing instruction of the stacker A is as follows: turning on both the left camera and the right camera to capture one picture at the 14^{th} warehouse location on the 10^{th} layer, respectively, at a depression angle of 30 degrees; the image capturing instruction of the stacker B is as follows: turning on all the deployed cameras to capture three pictures at 11^{th} warehouse location on the 20^{th} layer at an elevation angle of 75 degrees and a depression angle of 30 degrees, respectively; the image capturing instruction of the stacker C is as follows: turning on both the left camera and the right camera to capture one picture at the 7^{th}, 8^{th}, 9^{th}, and 10^{th} warehouse locations on the 27^{th} layer, respectively, at a depression angle of 80 degrees; and the stacker A, stacker B and the stacker C send the captured pictures to the image recognition system, respectively.

As such, the stacker captures the image according to the image capturing instruction sent from the image recognition system, and sends the captured image to the image recognition system. The image recognition system can be helped to determine the warehouse state information of the multiple warehouse locations in the first lane so as to accurately generate the temporary work task, thereby improving the accuracy of the stacker for executing the work task.

In an embodiment of the present disclosure, the control method of the stacker further includes: determining, by the image recognition system, the warehouse state information of at least a portion of warehouse locations in the first lane in a preset time period based on the intermediate table, wherein the preset time period is a period of time started with a generation time of the intermediate table and taking a duration of a preset threshold; comparing the warehouse state information obtained through the image recognition model with the warehouse state information determined based on the intermediate table; and recording a first type of warehouse location of which the warehouse state information obtained through the image recognition model is inconsistent with the warehouse state information determined based on the intermediate table, wherein the first type of warehouse location is a warehouse location of which a warehouse state is to be verified.

Here, the preset time period may be set or adjusted according to a user requirement or a task requirement. The preset time period takes the generation time of the intermediate table as a starting point, and an end point of the preset time period can be adjusted according to the user requirement and the task requirement.

In some embodiments, the first type of warehouse location is a warehouse location of which the warehouse state is to be verified. Illustratively, the warehouse state information obtained according to the image recognition model is: the 3^{rd} warehouse location on the 10^{th} layer on the left side of the lane 20 - warehoused - FDY yarn spindle with the batch number of B005, the 17^{th} warehouse location on the 21^{st} layer on the right side of the lane 70 - warehoused - DTY yarn spindle with the batch number of A011, the 21^{st} warehouse location on the 16^{th} layer on the right side of the lane 60 - warehoused, and the 2^{nd} warehouse location on the 32^{nd} layer on the left side of the lane 90 - not warehoused; the warehouse state information obtained according to the intermediate table is as follows: the 3^{rd} warehouse location on the 10^{th} layer on the left side of the lane 20 - warehoused - FDY yarn spindle with the batch number of B005, the 17^{th} warehouse location on the 21^{st} layer on the right side of the lane 70 - warehoused - DTY yarn spindle with the batch number of A011, the 21^{st} warehouse location on the 16^{th} layer on the right side of the lane 60 - not warehoused, and the 2^{nd} warehouse location on the 32^{nd} layer on the left side of the lane 90 - not warehoused; the warehouse state information obtained through the image recognition model is compared with the warehouse state information determined based on the intermediate table; and the first type of warehouse location, i.e., the 21^{st} warehouse location on the 16^{th} layer on the right side of the lane 60, of which the warehouse state information obtained through the image recognition model is inconsistent with the warehouse state information determined based on the intermediate table is recorded. The 21^{st} warehouse location on the 16^{th} layer on the right side of the lane 60 is the first type of warehouse location of which the warehouse state is to be verified.

As such, the first type of warehouse location with inconsistent warehouse state information can be obtained by comparing the warehouse state information obtained by the image recognition model with the warehouse state information determined based on the intermediate table, so that the warehouse state information of the first type of warehouse location can be verified in time, thereby avoiding repeated operation and improving the efficiency and the safety of the stacker for executing work tasks.

In an embodiment of the present disclosure, the determining the position of the target warehouse location corresponding to the temporary work task based on the warehouse state information of the plurality of warehouse locations in the first lane includes: selecting, under the condition that the temporary work task is a temporary warehousing task, the target warehouse location for the temporary warehousing task from at least one second type of warehouse location of which the warehouse state information obtained through the image recognition model is consistent with the warehouse state information determined based on the intermediate table, and determining the position of the target warehouse location, wherein the second type of warehouse location is a warehouse location in which goods has not been stored.

In some embodiments, the second type of warehouse location is a warehouse location in which goods has not been stored. Illustratively, in the case that the temporary work task is a temporary warehousing task, the warehouse state information obtained according to the image recognition model is as follows: the 7^{th} warehouse location on the 2^{nd} layer on the left side of the lane 14 - warehoused - FDY yarn spindle with the batch number of B011, the 14^{th} warehouse location on the 36^{th} layer on the right side of the lane 21 - not warehoused, the 19^{th} warehouse location on the 22^{nd} layer on the right side of the lane 44 - not warehoused, and the 12^{th} warehouse location on the 25^{th} layer on the left side of the lane 16 - not warehoused; the warehouse state information obtained according to the intermediate table is as follows: the 7^{th} warehouse location on the 2^{nd} layer on the left side of the lane 14 - warehoused - FDY yarn spindle with the batch number of B011, the 14^{th} warehouse location on the 36^{th} layer on the right side of the lane 21 - warehoused, the 19^{th} warehouse location on the 22^{nd} layer on the right side of the lane 44 - not warehoused, and the 12^{th} warehouse location on the 25^{th} layer on the left side of the lane 16 - not warehoused; a target warehouse location is selected for the temporary warehousing task from at least one second type of warehouse location of which the warehouse state information obtained through the image recognition model is consistent with the warehouse state information determined based on the intermediate table, i.e., from the 19^{th} warehouse location on the 22^{nd} layer on the right side of the lane 44 and the 12^{th} warehouse location on the 25^{th} layer on the left side of the lane 16; the second type of warehouse location is a warehouse location in which goods has not been stored.

As such, the target warehouse location can be selected for the temporary warehousing task from at least one second type of warehouse location of which the warehouse state information obtained through the image recognition model is consistent with the warehouse state information determined based on the intermediate table, improving the efficiency and the accuracy of the temporary warehousing task.

In an embodiment of the present disclosure, the determining the position of the target warehouse location corresponding to the temporary work task based on the warehouse state information of the plurality of warehouse locations in the first lane includes: selecting, under the condition that the temporary work task is a temporary ex-warehousing task, the target warehouse location for the temporary ex-warehousing task, in conjunction with a goods batch number designated by the temporary ex-warehousing task, from at least one third type of warehouse location of which the warehouse state information obtained through the image recognition model is consistent with the warehouse state information determined based on the intermediate table; and determining the position of the target warehouse location, wherein the third type of warehouse location is a warehouse location in which goods has been stored.

In some embodiments, the third type of warehouse location is a warehouse location in which goods has been stored. Illustratively, in the case that the temporary work task is a temporary ex-warehousing task, the warehouse state information obtained according to the image recognition model is as follows: the 20^{th} warehouse location on the 14^{th} layer on the left side of the lane 4 - warehoused - FDY yarn spindle with the batch number of B011, the 6^{th} warehouse location on the 20^{th} layer on the right side of the lane 41 - warehoused - FDY yarn spindle with the batch number of B011, the 9^{th} warehouse location on the 12^{th} layer on the right side of the lane 31 - warehoused - DTY yarn spindle with the batch number of A011, and the 12^{th} warehouse location on the 25^{th} layer on the left side of the lane 16 - not warehoused; the warehouse state information obtained according to the intermediate table is as follows: the 20^{th} warehouse location on the 14^{th} layer on the left side of the lane 4 - not warehoused, the 6^{th} warehouse location on the 20^{th} layer on the right side of the lane 41 - warehoused - FDY yarn spindle with the batch number of B011, the 9^{th} warehouse location on the 12^{th} layer on the right side of the lane 31 - warehoused - DTY yarn spindle with the batch number of A011, and the 12^{th} warehouse location on the 25^{th} layer on the left side of the lane 16 - not warehoused; a target warehouse location is selected for the temporary ex-warehousing task from at least one third type of warehouse location of which the warehouse state information obtained through the image recognition model is consistent with the warehouse state information determined based on the intermediate table, i.e., from the 6^{th} warehouse location on the 20^{th} layer on the right side of the lane 41 - warehoused - FDY yarn spindle with the batch number of B011 and the 9^{th} warehouse location on the 12^{th} layer on the right side of the lane 31 - warehoused - DTY yarn spindle with the batch number of A011; if the temporary ex-warehousing task is designated to DTY yarn spindle with a goods batch number of A011, the 9^{th} warehouse location on the 12^{th} layer on the right side of the lane 31 is selected as the target warehouse location for the temporary ex-warehousing task, which is a warehouse location in which goods has been stored.

As such, the target warehouse location can be selected for the temporary ex-warehousing task, in conjunction with the goods batch number designated by the temporary ex-warehousing task, from at least one third type of warehouse location of which the warehouse state information obtained through the image recognition model is consistent with the warehouse state information determined based on the intermediate table, thereby improving the efficiency and the accuracy of the temporary ex-warehousing task.

In an embodiment of the present disclosure, the recognizing the plurality of images in the first lane of the three-dimensional warehouse through the image recognition model to obtain the warehouse state information of the plurality of warehouse locations in the first lane includes: inputting, by the image recognition system, the plurality of images and historical warehouse state information of the three-dimensional warehouse into the image recognition model to obtain the warehouse state information of the plurality of warehouse locations output by the image recognition model, wherein the image recognition model is configured to recognize the presence of goods stored in the warehouse location and an identifier of the goods stored in the warehouse location.

In some embodiments, the historical warehouse state information may refer to historical records of warehousing and ex-warehousing of past goods saved in the warehouse management system. The historical warehouse state information can include a position of goods in the three-dimensional warehouse, a warehousing quantity, warehousing date, ex-warehousing date, and a batch number yarn spindle, for example.

In some embodiments, the identifier of the goods may be a serial number, a label and a two-dimensional code of the goods, for example.

As such, the warehouse state information recognized by the image recognition model refers to the historical warehouse state information of the three-dimensional warehouse, so that the accuracy of the image recognition model can be improved.

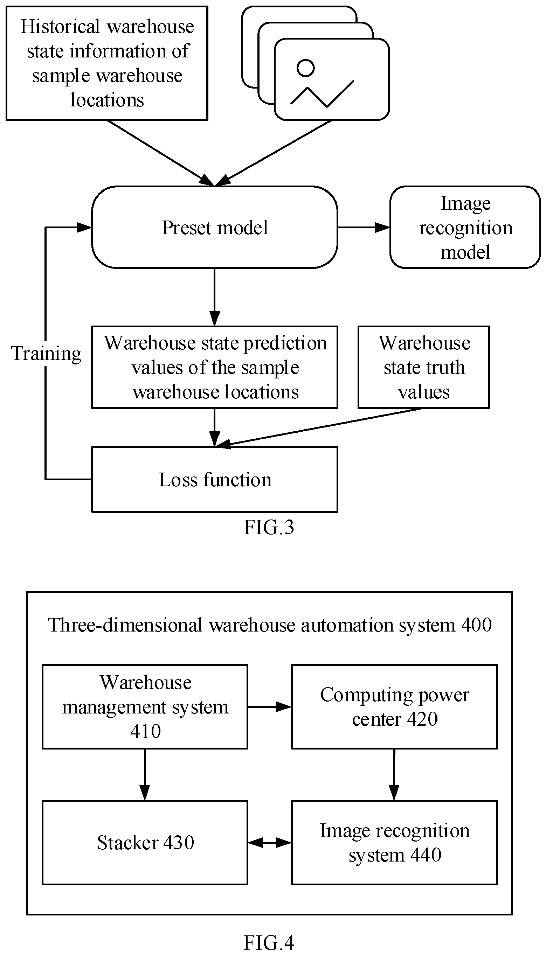

FIG. 3 is a schematic training diagram of image recognition model. As shown in FIG. 3, the image recognition model is obtained by a training mode including: acquiring historical warehouse state information and historical images of a plurality of sample warehouse locations of the three-dimensional warehouse; inputting the historical warehouse state information and the historical images of the plurality of sample warehouse locations into a preset model to obtain warehouse state prediction values of the plurality of sample warehouse locations; constructing a loss function based on warehouse state truth values and the warehouse state prediction values of the plurality of sample warehouse locations; and training the preset model based on the loss function to obtain the image recognition model.

In some embodiments, the sample warehouse locations may be set and adjusted as required.

In some embodiments, the historical images are images corresponding to historical warehouse state information of the sample warehouse locations. The historical images can be collected by a camera mounted on the stacker; or can be collected by a camera mounted on an overhead frame above the lane; or can be collected by a drone. The illustration above serves merely as an example and does not constitute an exhaustive limitation on the various methods of acquiring historical images; a comprehensive enumeration of all possibilities is not provided herein.

As such, the warehouse state information of the warehouse locations can be predicted through the image recognition model trained in advance, and the position of the target warehouse location corresponding to the temporary work task is determined according to the warehouse state information of the warehouse locations, thereby improving the work efficiency of the stacker and achieving intelligent management of warehousing/ex-warehousing of the yarn spindles.

An embodiment of the present disclosure further provides a three-dimensional warehouse automation system capable of executing the above control method of the stacker, and FIG. 4 is a schematic block diagram of the three-dimensional warehouse automation system 400 according to the embodiment of the present disclosure. As shown in FIG. 4, the three-dimensional warehouse automation system 400 includes: a warehouse management system 410 configured to send a normal work task to a stacker under the condition of communicating with the stacker, and to send an intermediate table to a computing power center; the computing power center 420 configured to store the intermediate table, the intermediate table recording at least a work task which has not been completed by the warehouse management system; the stacker 430 configured to execute the normal work task when receiving the normal work task sent from the warehouse management system, to send a task allocation request to an image recognition system under the condition that the communication with the warehouse management system is interrupted, to receive a temporary work task and a position of a target warehouse location returned by the image recognition system, and to execute the temporary work task based on the position of the target warehouse location; and the image recognition system 440 configured to acquire the intermediate table from the computing power center in response to receiving the task allocation request sent from the stacker, to recognize a plurality of images in a first lane of a three-dimensional warehouse through an image recognition model to obtain warehouse state information of a plurality of warehouse locations in the first lane, to determine the temporary work task of the stacker based on the intermediate table, to determine the position of the target warehouse location corresponding to the temporary work task based on the warehouse state information of the plurality of warehouse locations in the first lane, and to send the temporary work task and the position of the target warehouse location to the stacker.

It should be noted that, the present disclosure does not impose any restriction on the quantity of stackers in a three-dimensional warehouse automation system.

As such, by means of the synergistic integration between the warehouse management system, the computing power center, the stackers and the image recognition system in the three-dimensional warehouse automation system, the stacker can execute the temporary work task according to the warehouse state information of the warehouse locations under the condition that the communication with the warehouse management system is interrupted, thereby improving the efficiency and the safety of the stacker for executing the tasks.

It should be understood that the schematic diagrams shown in FIGS. 2 and 3 are only illustrative and not restrictive, and the contents in the figures can be adaptively adjusted or changed according to the operation requirements, which will not be described herein. Various obvious changes and/or substitutions can be made by those skilled in the art based on the examples of FIGS. 2 and 3, and the resulting solution still falls within the scope of the disclosure of the embodiments of the present disclosure.

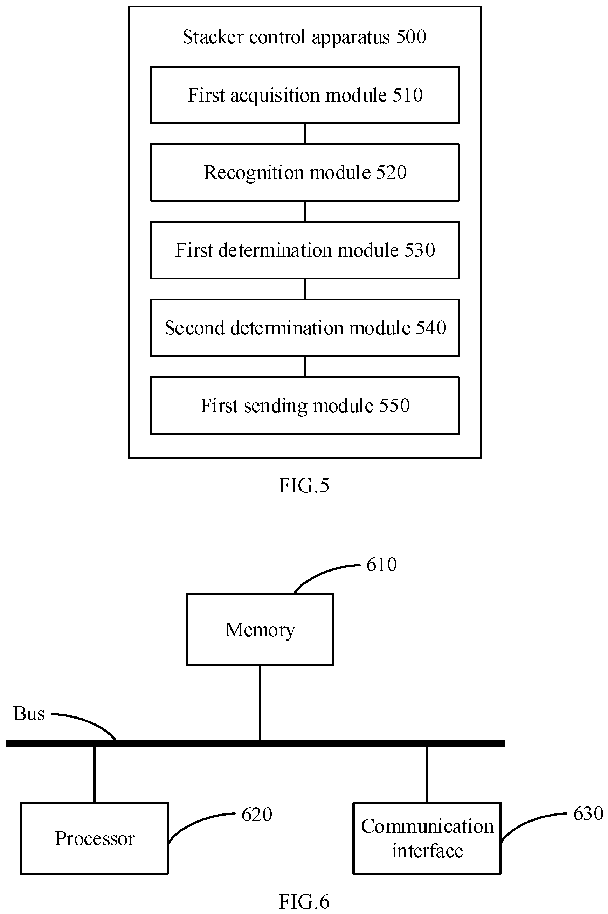

An embodiment of the present disclosure provides a control apparatus of a stacker. As shown in FIG. 5, the control apparatus of the stacker may include:
a first acquisition module 510, configured to acquire an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
a recognition module 520 is configured to recognize a plurality of images in a first lane of a three-dimensional warehouse through an image recognition model to obtain warehouse state information of a plurality of warehouse locations in the first lane;
a first determination module 530, configured to determine a temporary work task of the stacker based on the intermediate table;
a second determination module 540, configured to determine, based on the warehouse state information of the plurality of warehouse locations in the first lane, a position of a target warehouse location corresponding to the temporary work task; and
a first sending module 550, configured to send the temporary work task and the position of the target warehouse location to the stacker, so that the stacker executes the temporary work task based on the position of the target warehouse location.

In some embodiments, the control apparatus of the stacker further includes: a first receiving module (not shown in FIG. 5) configured to receive an execution condition of the temporary work task sent from the stacker; and an update module (not shown in FIG. 5) configured to update the intermediate table based on the execution condition of the temporary work task.

In some embodiments, the control apparatus of the stacker further includes: a second sending module (not shown in FIG. 5) configured to send, in response to receiving a task termination request sent from a stacker, an updated intermediate table to the warehouse management system, so that the warehouse management system performs summary processing based on the updated intermediate table and the intermediate table stored in the warehouse management system, and determine a normal work task based on a summarized intermediate table, wherein the task termination request is sent after the communication between the stacker and the warehouse management system is recovered.

In some embodiments, the control apparatus of the stacker further includes: a third sending module (not shown in FIG. 5) configured to send an image capturing instruction to the stacker after receiving the task allocation request, wherein the capturing instruction is configured to indicate warehouse locations to be captured and a capturing angle so that the stacker captures images of the warehouse locations to be captured at the capturing angle based on the image capturing instruction, and the warehouse locations to be captured are a portion of warehouse locations all included in the first lane; and a second receiving module (not shown in FIG. 5) configured to receive the images of the warehouse locations to be captured in the first lane sent from the stacker, wherein the plurality of images include images of the warehouse locations to be captured.

In some embodiments, the control apparatus of the stacker further includes: a third determination module (not shown in FIG. 5) configured to determine the warehouse state information of at least a portion of warehouse locations in the first lane in a preset time period based on the intermediate table, wherein the preset time period is a period of time started with a generation time of the intermediate table and taking a duration of a preset threshold; a comparison module (not shown in FIG. 5) configured to compare the warehouse state information obtained through the image recognition model with the warehouse state information determined based on the intermediate table; and a recording module (not shown in FIG. 5) configured to record a first type of warehouse location of which the warehouse state information obtained through the image recognition model is inconsistent with the warehouse state information determined based on the intermediate table, wherein the first type of warehouse location is a warehouse location of which a warehouse state is to be verified.

In some embodiments, the second determination module 540 includes: a first determination sub-module configured to select, under the condition that the temporary work task is a temporary warehousing task, the target warehouse location for the temporary warehousing task from at least one second type of warehouse location of which the warehouse state information obtained through the image recognition model is consistent with the warehouse state information determined based on the intermediate table, and determine the position of the target warehouse location, wherein the second type of warehouse location is a warehouse location in which goods has not been stored.

In some embodiments, the second determination module 540 includes: a second determination sub-module configured to select, under the condition that the temporary work task is a temporary ex-warehousing task, the target warehouse location for the temporary ex-warehousing task, in conjunction with a goods batch number designated by the temporary ex-warehousing task, from at least one third type of warehouse location of which the warehouse state information obtained through the image recognition model is consistent with the warehouse state information determined based on the intermediate table; and determine the position of the target warehouse location, wherein the third type of warehouse location is a warehouse location in which goods has been stored.

In some embodiments, the recognition module 520 includes: an input sub-module configured to input the plurality of images and historical warehouse state information of the three-dimensional warehouse into the image recognition model to obtain the warehouse state information of the plurality of warehouse locations output by the image recognition model, wherein the image recognition model is configured to recognize the presence of goods stored in the warehouse location and an identifier of the goods stored in the warehouse location.

In some embodiments, the image recognition model is obtained by a training mode including: acquiring historical warehouse state information and historical images of a plurality of sample warehouse locations of the three-dimensional warehouse; inputting the historical warehouse state information and the historical images of the plurality of sample warehouse locations into a preset model to obtain warehouse state prediction values of the plurality of sample warehouse locations; constructing a loss function based on warehouse state truth values and the warehouse state prediction values of the plurality of sample warehouse locations; and training the preset model based on the loss function to obtain the image recognition model.

It should be appreciated by those skilled in the art that the functions of each processing module in the control apparatus of the stacker according to the embodiment of the present disclosure may be understood by referring to the above description in connection with the control method of the stacker, and each processing module in the control apparatus of the stacker according to the embodiment of the present disclosure may be implemented by an analog circuit that implements the functions according to the embodiment of the present disclosure, or may be implemented by running software that implements the functions according to the embodiment of the present disclosure on an electronic device.

According to the control apparatus of the stacker according to the embodiment of the present disclosure, under the condition that the communication between the stacker and the warehouse management system is interrupted, the stacker can execute the temporary work task according to the warehouse state information of the warehouse location, thereby improving the efficiency and the safety of the stacker for executing the task.

According to embodiments of the present disclosure, the present disclosure also provides an electronic device and a readable storage medium.

FIG. 6 is a structural block diagram of an electronic device according to an embodiment of the present disclosure. As shown in FIG. 6, the electronic device includes: a memory 610 and a processor 620, and the memory 610 stores a computer program that can run on the processor 620. There may be one or more memories 610 and processors 620. The memory 610 may store one or more computer programs, and the one or more computer programs cause the electronic device to perform the method provided in the above method embodiment, when executed by the electronic device. The electronic device may also include: a communication interface 630 configured to communicate with an external device for data interactive transmission.

If the memory 610, the processor 620 and the communication interface 630 are implemented independently, the memory 610, the processor 620 and the communication interface 630 may be connected to each other and complete communication with each other through a bus. The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the bus is represented by only one thick line in FIG. 6, but this thick line does not represent only one bus or only one type of bus.

Optionally, in a specific implementation, if the memory 610, the processor 620 and the communication interface 630 are integrated on one chip, the memory 610, the processor 620 and the communication interface 630 may communicate with each other through an internal interface.

It should be understood that the above-mentioned processor may be a Central Processing Unit (CPU) or other general-purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, Static RAM (SRAM), Dynamic Random Access Memory (DRAM), Synchronous DRAM (SDRAM), Double Data Date SDRAM (DDR SDRAM), Enhanced SDRAM (ESDRAM), Synchlink DRAM (SLDRAM) and Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification if there is no conflict with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

In the description of the present specification, it is to be understood that the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, are used based on the orientations and positional relationships shown in the drawings, and are used merely for convenience of description and simplicity of description, but do not indicate or imply that the device or element referred to must have a particular orientation, be constructed and operated in a particular orientation, and therefore should not be considered as limiting the present disclosure.

## Claims

1. A control method of a stacker applied to an image recognition system, **characterized by** comprising:
acquiring (S101) an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
recognizing (S102) a plurality of images in a first lane of a three-dimensional warehouse through an image recognition model to obtain warehouse state information of a plurality of warehouse locations in the first lane;
determining (S103) a temporary work task of the stacker based on the intermediate table;
determining (S 104), based on the warehouse state information of the plurality of warehouse locations in the first lane, a position of a target warehouse location corresponding to the temporary work task; and
sending (S105) the temporary work task and the position of the target warehouse location to the stacker, so that the stacker executes the temporary work task based on the position of the target warehouse location.

2. The method of claim 1, further comprising:
receiving an execution condition of the temporary work task sent from the stacker; and
updating the intermediate table based on the execution condition of the temporary work task.

3. The method of claim 2, further comprising:
sending, in response to receiving a task termination request sent from a stacker, an updated intermediate table to the warehouse management system, so that the warehouse management system performs summary processing based on the updated intermediate table and the intermediate table stored in the warehouse management system, and determining a normal work task based on a summarized intermediate table, wherein the task termination request is sent after the communication between the stacker and the warehouse management system is recovered.

4. The method of claim 1, wherein after receiving the task allocation request, the method further comprises:
sending an image capturing instruction to the stacker, wherein the capturing instruction is configured to indicate warehouse locations to be captured and a capturing angle so that the stacker captures images of the warehouse locations to be captured at the capturing angle based on the image capturing instruction, and the warehouse locations to be captured are a portion of warehouse locations all included in the first lane; and
receiving the images of the warehouse locations to be captured in the first lane sent from the stacker, wherein the plurality of images include images of the warehouse locations to be captured.

5. The method of claim 1, further comprising:
determining the warehouse state information of at least a portion of warehouse locations in the first lane in a preset time period based on the intermediate table, wherein the preset time period is a period of time started with a generation time of the intermediate table and taking a duration of a preset threshold;
comparing the warehouse state information obtained through the image recognition model with the warehouse state information determined based on the intermediate table; and
recording a first type of warehouse location of which the warehouse state information obtained through the image recognition model is inconsistent with the warehouse state information determined based on the intermediate table, wherein the first type of warehouse location is a warehouse location of which a warehouse state is to be verified.

6. The method of claim 5, wherein the determining the position of the target warehouse location corresponding to the temporary work task based on the warehouse state information of the plurality of warehouse locations in the first lane comprises:
selecting, under the condition that the temporary work task is a temporary warehousing task, the target warehouse location for the temporary warehousing task from at least one second type of warehouse location of which the warehouse state information obtained through the image recognition model is consistent with the warehouse state information determined based on the intermediate table, and determining the position of the target warehouse location, wherein the second type of warehouse location is a warehouse location in which goods has not been stored.

7. The method of claim 5, wherein the determining the position of the target warehouse location corresponding to the temporary work task based on the warehouse state information of the plurality of warehouse locations in the first lane comprises:
selecting, under the condition that the temporary work task is a temporary ex-warehousing task, the target warehouse location for the temporary ex-warehousing task, in conjunction with a goods batch number designated by the temporary ex-warehousing task, from at least one third type of warehouse location of which the warehouse state information obtained through the image recognition model is consistent with the warehouse state information determined based on the intermediate table; and determining the position of the target warehouse location, wherein the third type of warehouse location is a warehouse location in which goods has been stored.

8. The method of claim 1, wherein the recognizing (S 102) the plurality of images in the first lane of the three-dimensional warehouse through the image recognition model to obtain the warehouse state information of the plurality of warehouse locations in the first lane comprises:
inputting the plurality of images and historical warehouse state information of the three-dimensional warehouse into the image recognition model to obtain the warehouse state information of the plurality of warehouse locations output by the image recognition model, wherein the image recognition model is configured to recognize the presence of goods stored in the warehouse location and an identifier of the goods stored in the warehouse location.

9. The method of claim 1, wherein the image recognition model is obtained by a training mode comprising:
acquiring historical warehouse state information and historical images of a plurality of sample warehouse locations of the three-dimensional warehouse;
inputting the historical warehouse state information and the historical images of the plurality of sample warehouse locations into a preset model to obtain warehouse state prediction values of the plurality of sample warehouse locations;
constructing a loss function based on warehouse state truth values and the warehouse state prediction values of the plurality of sample warehouse locations; and
training the preset model based on the loss function to obtain the image recognition model.

10. A three-dimensional warehouse automation system (400), **characterized by** comprising:
a warehouse management system (410) configured to send a normal work task to a stacker under the condition of communicating with the stacker, and to send an intermediate table to a computing power center;
the computing power center (420) configured to store the intermediate table, the intermediate table recording at least a work task which has not been completed by the warehouse management system;
the stacker (430) configured to execute the normal work task when receiving the normal work task sent from the warehouse management system, to send a task allocation request to an image recognition system under the condition that the communication with the warehouse management system is interrupted, to receive a temporary work task and a position of a target warehouse location returned by the image recognition system, and to execute the temporary work task based on the position of the target warehouse location; and
the image recognition system (440) configured to acquire the intermediate table from the computing power center in response to receiving the task allocation request sent from the stacker, to recognize a plurality of images in a first lane of a three-dimensional warehouse through an image recognition model to obtain warehouse state information of a plurality of warehouse locations in the first lane, to determine the temporary work task of the stacker based on the intermediate table, to determine the position of the target warehouse location corresponding to the temporary work task based on the warehouse state information of the plurality of warehouse locations in the first lane, and to send the temporary work task and the position of the target warehouse location to the stacker.

11. A control apparatus of a stacker (500) applied to an image recognition system, **characterized by** comprising:
a first acquisition module (510), configured to acquire an intermediate table in response to receiving a task allocation request sent from the stacker, wherein the intermediate table records at least a work task which is not completed by a warehouse management system, and the task allocation request is sent from the stacker under the condition that communication between the stacker and the warehouse management system is interrupted;
a recognition module (520) is configured to recognize a plurality of images in a first lane of a three-dimensional warehouse through an image recognition model to obtain warehouse state information of a plurality of warehouse locations in the first lane;
a first determination module (530), configured to determine a temporary work task of the stacker based on the intermediate table;
a second determination module (540), configured to determine, based on the warehouse state information of the plurality of warehouse locations in the first lane, a position of a target warehouse location corresponding to the temporary work task; and
a first sending module (550), configured to send the temporary work task and the position of the target warehouse location to the stacker, so that the stacker executes the temporary work task based on the position of the target warehouse location.

12. A non-transitory computer-readable storage medium storing a computer instruction thereon, wherein the computer instruction is used to cause a computer to execute the method of any one of claims 1 to 9.
